# EUROPEAN PATENT APPLICATION

(11) **EP 1 462 684 A1**
(43) Date of publication of application: **29.09.2004**
(21) Application number: 03006763.1
(22) Date of filing: 25.03.2003
(51) Int. Cl.: F16J 9/14

(54) **Piston device**

(71) Applicant: Kanao, Mituhiro, Kure-Shi, 737-0935, Hiroshima-ken (JP)
(72) Inventor: Kanao, Mituhiro, Kure-Shi, 737-0935, Hiroshima-ken (JP)
(74) Representative: Viering, Jentschura & Partner

(57) **Abstract**

The present invention is intended to prevent a cylinder wall from wearing, and prevent gas from leaking out a space between a piston ring and a cylinder wall.
The subjects are resolved by using a piston device, comprising a piston pin (4), a piston cap (2), and a piston body (1) to be fitted to the piston cap (2), in which the piston cap (2) is provided with a closed piston ring (3).

## Description

### TECHNICAL FIELD

The present invention concerns a piston device.

### RELATED BACKGROUND ART

For the prior art, a piston device according to the Japanese Patent Application No. 1993-206769 of the present Applicant is known, which is an invention concerning a closed resin piston ring, which has no open joint, made of fluorocarbon resin (plastic) for a refrigerator pump. However it is not the one concerning a closed metal piston ring like that of the present invention. Moreover, at that time, the present Applicant had not been brought to a concept of using the closed metal piston ring for an internal combustion engine. Thereafter, the present Applicant has been brought to a concept of using the closed metal piston ring for the internal combustion engine and materialized it, for example, as shown in the Japanese Patent Application No. 2001-67780 in which the piston ring was fixed by a snap ring. Consequently, a method and a composition of fixing the closed metal piston ring by a double piston are different from that of the Japanese Patent Application No. 2001-67780.

### SUMMARY OF THE INVENTION

An opened metal piston ring which has an open joint can not hold a circularity due to the open joint, lets gas leak from the open joint, and an angular face thereof scrapes off the cylinder wall face because of a chamfer thereof. Consequently it is an object to solve these problems or other problems.

The present invention intends to solve the aforementioned problems of the prior art by providing a piston device, comprising a piston pin (4), a piston cap (2) and a piston body (1) to be fitted to the piston cap (2), in which the piston cap (2) is provided with a closed piston ring (3) which dose not have an open joint.
Besides, in the aforementioned piston device, an outside corner of the closed piston ring (3) may be formed into a round corner face (curved face), an opened piston ring (5) which has an open joint be fitted to the piston body (1), and an outside corner of the piston ring (5) be formed into a round corner face (curved face).

### BRIEF DESCRIPTION OF THE DRAWINGS

Fig. 1 is a side opening view of a piston device of the present invention; and

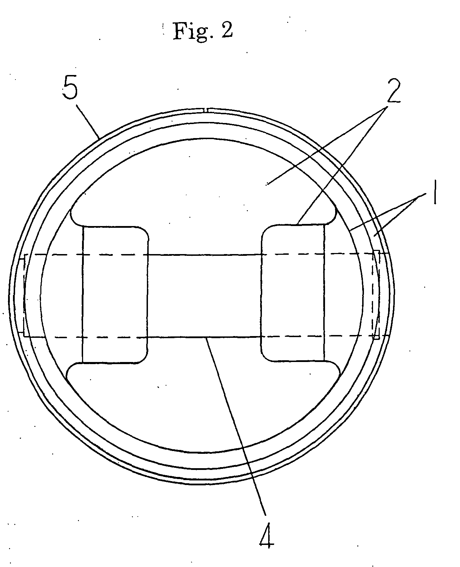

Fig. 2 is a front view of Fig. 1.

### DESCRIPTION OF THE SPECIAL EMBODIMENTS

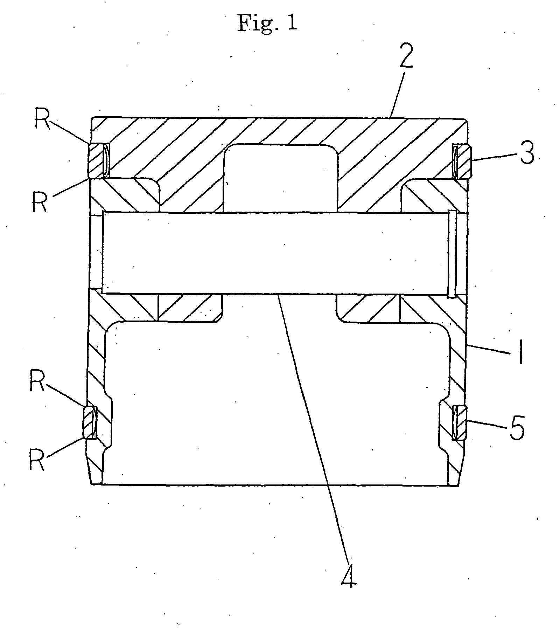

As shown in Fig. 1, the closed metal piston ring 3 having a round corner face (positive piston ring) is pinched between the piston cap 2 and the piston body 1 of a double piston, and has an effect of a top ring sliding extremely smoothly with a high tightness that would not scrape off the cylinder. Next, the opened piston ring 5, having a round corner face, disposed under the piston body 1 prevents the cylinder from a slapping action of the piston by a crosshead effect (sliding guide effect) of the piston.

The problem of smoke and soot discharge from the internal combustion engine is almost solved, because problems such as gas leakage from the open joint of the conventional piston ring, gas leakage from a space thereof formed due to a defective circularity (distortion), gas leakage from a cylinder forced into an oval shape due to the scrape because the piston ring chamfered and so on are resolved by using the piston device of the present invention. The piston ring of the present invention is most appropriate for a large internal combustion engine, because the structure of the piston ring portion is extremely simple and robust.

### Description of Symbols

(1) piston main body
(2) piston cap
(3) closed metal piston ring which dose not have an open joint and has a round corner face
(4) piston ring
(5) opened metal piston ring which has an open joint and a round corner face

## Claims

1. A piston device, comprising a piston pin (4), a piston cap (2), and a piston body (1) to be fitted to said piston cap (2), wherein said piston cap (2) is provided with a closed piston ring (3) which dose not have an open joint.

2. The piston device according to claim 1, wherein an outside corner of said closed piston ring (3) is formed into a round corner face (curved face), an opened piston ring (5) which has an open joint is fitted to said piston body (1), and an outside corner of said piston ring (5) is formed into a round corner face (curved face).
